(19) Europäisches Patentamt
European Patent Office
Office européen des brevets

(11) **EP 4 567 927 A1**

(12) **EUROPEAN PATENT APPLICATION**

(43) Date of publication:
**11.06.2025 Bulletin 2025/24**

(21) Application number: **24217903.4**

(22) Date of filing: **05.12.2024**

(51) International Patent Classification (IPC):
*H01M 4/36* [(2006.01)]   *H01M 4/505* [(2010.01)]
*H01M 4/525* [(2010.01)]   *H01M 4/58* [(2010.01)]
*H01M 10/0525* [(2010.01)]

(52) Cooperative Patent Classification (CPC):
**H01M 4/366; H01M 4/505; H01M 4/525;
H01M 4/5825; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.12.2023 KR 20230174815**

(71) Applicant: **Samsung SDI Co., Ltd
Gyeonggi-do 17084 (KR)**

(72) Inventors:
• **DOO, Sungwook**
  **17084 Yongin-si (KR)**
• **KONG, Youngsun**
  **17084 Yongin-si (KR)**
• **KIM, Young-Ki**
  **17084 Yongin-si (KR)**

• **CHOO, Sung Ho**
  **17084 Yongin-si (KR)**
• **KANG, Seok Mun**
  **17084 Yongin-si (KR)**
• **YOON, Jaesang**
  **17084 Yongin-si (KR)**
• **KANG, Gwiwoon**
  **17084 Yongin-si (KR)**
• **JUN, Dowook**
  **17084 Yongin-si (KR)**
• **KANG, Byungwuk**
  **17084 Yongin-si (KR)**
• **JEONG, Jaeyong**
  **17084 Yongin-si (KR)**

(74) Representative: **Marks & Clerk LLP
15 Fetter Lane
London EC4A 1BW (GB)**

(54) **POSITIVE ELECTRODE ACTIVE MATERIALS, PREPARATION METHODS THEREOF, POSITIVE ELECTRODES, AND RECHARGEABLE LITHIUM BATTERIES**

(57)     A positive electrode active material, a method of preparing the same, a positive electrode, and a rechargeable lithium battery including the positive electrode are provided. The positive electrode active material includes core particles and a coating layer on the surface of the core particles. The core particles include a layered lithium nickel-manganese-based composite oxide having a nickel content (e.g., amount) of greater than, or equal to, about 60 mol% based on 100 mol% of a total metal amount excluding lithium. The coating layer includes Al and P.

FIG. 5

EP 4 567 927 A1

**Description**

**BACKGROUND**

**1. Field**

According to one or more embodiments, the present disclosure relates to positive electrode active materials, preparation methods thereof, positive electrodes including the positive electrode active materials, and rechargeable lithium batteries including the positive electrodes.

**2. Description of the Related Art**

A portable information device such as a cell phone, a laptop, smart phone, and/or the like and/or an electric vehicle may use, as a driving power source, a rechargeable lithium battery having relatively high energy density and having relative (e.g., easy) portability. Recently, research has been actively conducted to use a rechargeable lithium battery with relatively high energy density as a driving power source, e.g., for hybrid and/or electric vehicles and/or power storage power source, e.g., for resident power storage (e.g., an energy storage system (ESS) or a power wall).

One or more suitable positive electrode active materials have been investigated to achieve or realize rechargeable lithium batteries for applications to such uses. Among them, lithium nickel-based oxide, lithium nickel manganese cobalt composite oxide, lithium nickel cobalt aluminium composite oxide, and lithium cobalt oxide are mainly used as positive electrode active materials. However, while the demand for large-sized, high-capacity, or high-energy-density rechargeable lithium batteries has recently increased, the supply of a positive electrode active material including cobalt, a rare metal, is expected to be severely short. For example, because cobalt is expensive and there are not many remaining reserves, there are desires or needs for developing positive electrode active materials that exclude cobalt or reduce its content (e.g., amount).

**SUMMARY**

In one or more aspects of the present disclosure, as a positive electrode active material including a layered lithium nickel-manganese-based composite oxide, by introducing an optimal or suitable coating layer, performance of a rechargeable lithium battery at high temperatures and voltages may be improved. For example, the capacity characteristics, initial charge/discharge efficiency, and high-temperature cycle-life characteristics of the rechargeable lithium battery may be improved.

Additional aspects will be set forth in part in the description which follows and, in part, will be apparent from the description, or may be learned by practice of the presented embodiments.

In one or more embodiments, a positive electrode active material includes core particles including a layered lithium nickel-manganese-based composite oxide having a nickel content (e.g., amount) of greater than or equal to about 60 mol% based on 100 mol% of a total metal amount excluding lithium, and a coating layer located on a surface of the core particles and including Al and P.

In one or more embodiments, a method of preparing a positive electrode active material includes (i) preparing core particles including a layered lithium nickel-manganese-based composite oxide having a nickel content (e.g., amount) of greater than, or equal to, about 60 mol% based on 100 mol% of a total metal amount excluding lithium, (ii) adding an aluminium raw material to an aqueous solvent and mixing (e.g., them) to prepare a coating solution, (iii) adding the core particles to the coating solution and mixing (e.g., them) to prepare a first mixed solution, (iv) adding a phosphorus-based raw material to the first mixed solution and mixing (e.g., them) to prepare a second mixed solution, (v) removing an aqueous solvent from the second mixed solution, drying a resultant product, and heat treating it to obtain a positive electrode active material.

In one or more embodiments, a positive electrode includes a positive electrode current collector, and a positive electrode active material layer on the positive electrode current collector, wherein the positive electrode active material layer includes the aforementioned positive electrode active material.

In one or more embodiments, a rechargeable lithium battery includes the aforementioned positive electrode, a negative electrode, and an electrolyte.

At least some of the above and other features of the invention are set out in the claims.

The positive electrode active material according to one or more embodiments maximizes capacity while minimizing or reducing production cost, ensures long cycle-life, and improves high-voltage and high-temperature characteristics. A rechargeable lithium battery using the positive electrode active material may exhibit high initial charge/discharge capacity and efficiency, and may realize excellent or suitable high-temperature cycle-life characteristics and high-temperature storage characteristics.

## BRIEF DESCRIPTION OF THE DRAWINGS

FIGS. 1-4 are each a schematic diagram showing a rechargeable lithium battery according to one or more embodiments.

FIG. 5 is a scanning electron microscope (SEM) image of the surface of the coated positive electrode active material of Example 3.

FIG. 6 is an SEM image of the surface of the positive electrode active material of Comparative Example 1.

FIG. 7 is a scanning electron microscope energy dispersive spectroscopic analysis (SEM-EDS) graph of the surface of the coated positive electrode active material of Example 3.

FIG. 8 is an image mapping each element according to SEM-EDS analysis of the surface of the coated positive electrode active material of Example 3.

## DETAILED DESCRIPTION

Hereinafter, specific embodiments will be described in more detail so that those of ordinary skill in the art can easily implement them. Examples of which are illustrated in the accompanying drawings, wherein like reference numerals refer to like elements throughout, and duplicative descriptions thereof may not be provided. Accordingly, the embodiments are merely described, by referring to the drawings, to explain aspects of the present description. However, this disclosure may be embodied in many different forms and is not construed as limited to the example embodiments set forth herein, rather the present disclosure is defined by the scope of claims.

The terminology used herein is used to describe embodiments only, and is not intended to limit the present disclosure. The singular expressions "a," "an," and "the" include the plural expressions, including "at least one," unless the context clearly dictates otherwise.

As used herein, "combination thereof" refers to a mixture, a laminate, a composite, a copolymer, an alloy, a blend, a reaction product, and/or the like of the constituents.

Herein, it should be understood that use of terms such as "comprises," "comprise," "comprising," "includes," "including," "include," "having," "has," and/or "have" are intended to designate the presence of an embodied aspect, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In one or more embodiments, "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

In the context of the present application and unless otherwise defined, the terms "use," "using," and "used" may be considered synonymous with the terms "utilize," or "utilization," "utilizing," and "utilized," respectively.

**Definitions**

The term "particle diameter" as utilized herein refers to an average diameter of particles if (e.g., when) the particles are spherical, and refers to an average major axis length of particles if (e.g., when) the particles are non-spherical. For example, the average particle diameter may be measured by a method well suitable (known) to those skilled in the art, for example, by a particle size analyzer, or by a transmission electron microscope image or a scanning electron microscope image. In one or more embodiments, it is possible to obtain an average particle diameter value by measuring using a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. As used herein, if (e.g., when) a definition is not otherwise provided, the average particle diameter refers to a diameter ($D_{50}$) of particles having a cumulative volume of 50 volume% in the particle size distribution that is obtained by measuring the size (diameter or major axis length) of about 20 particles at random in a scanning electron microscope image.

Herein, the term "or" is not to be construed as an exclusive meaning, for example, "A or B" is construed to include A, B, A+B, and/or the like.

Herein, the term "metal" is interpreted as a concept including ordinary metals, transition metals and metalloids (semi-metals).

**Positive Electrode Active Material**

In one or more embodiments, a positive electrode active material includes core particles including a layered lithium nickel-manganese-based composite oxide having a nickel content (e.g., amount) of greater than, or equal to, about 60 mol% based on 100 mol% of a total metal amount excluding lithium, and a coating layer located on the surface of the core particles and including Al and P.

As the price of cobalt, a rare metal, has recently risen sharply, there is a desire or demand for the development of positive electrode active materials that exclude (e.g., do not include) cobalt or reduce its content (e.g., amount). Among which a positive electrode active material having an olivine crystal structure (such as lithium iron phosphate (LFP), lithium manganese phosphate (LMP), lithium manganese iron phosphate (LMFP), and/or the like), or a spinel crystal structure (such as lithium manganese oxide (LMO) and/or the like), may each have a limitation in realizing high capacity due to a small available lithium amount within their structures. The layered lithium nickel-manganese positive electrode active material of the present disclosure has excellent or suitable capacity and efficiency characteristics due to the high available lithium capacity in the structure, making it suitable as a material for high-capacity batteries. However, because the amount of cobalt, which is a component of (e.g., plays a key role in) the layered structure, is reduced (e.g., partially removed), structural stability decreases, resistance increases, and it becomes difficult to achieve or secure long cycle-life characteristics. In one or more embodiments, the layered lithium nickel-manganese positive electrode active material of the present disclosure, from which cobalt is excluded, may be associated with (e.g., rather have a problem of) an accelerated side reaction with an electrolyte under high-voltage and high-temperature conditions, resultantly increasing gas generation and deteriorating cycle-life characteristics.

In one or more embodiments, in order to improve the surface stability of the layered lithium nickel-manganese-based positive electrode active material of the present disclosure (e.g., in the high voltage region), a coating layer including Al and P is included (e.g., introduced) to strengthen the particle surface of the active material. For example, forming a coating layer having a structural three-dimensional (3D) lithium channel improves high-voltage, high-temperature cycle-life characteristics, and initial charge/discharge efficiency of a rechargeable lithium battery including the layered lithium nickel-manganese-based positive electrode active material.

**Core Particles**

The core particles include a layered lithium nickel-manganese-based composite oxide. A nickel content (e.g., amount) is greater than, or equal to, about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal amount excluding lithium in the layered lithium nickel-manganese-based composite oxide. If (e.g., when) the nickel content (e.g., amount) satisfies the disclosed ranges, high capacity may be achieved and structural stability may be increased even if (e.g., when) the cobalt content (e.g., amount) is reduced or removed entirely.

A manganese content (e.g., amount) may be, for example, greater than, or equal to, about 15 mol%, for example, about 15 mol% to about 40 mol%, about 15 mol% to about 35 mol%, about 15 mol% to about 30 mol%, or about 20 mol% to about 30% based on 100 mol% of a total metal amount excluding lithium in the layered lithium nickel-manganese-based composite oxide. If (e.g., when) the manganese content (e.g., amount) satisfies the disclosed ranges, the positive electrode active material may improve structural stability while realizing high capacity.

The layered lithium nickel-manganese-based composite oxide may be a layered lithium nickel-manganese-aluminium-based composite oxide that further includes aluminium in addition to nickel and manganese. If (e.g., when) the composite oxide contains aluminium, it is advantageous to maintain a stable layered structure even if (e.g., when) the cobalt element is excluded from the structure. An aluminium content (e.g., amount) based on 100 mol% (of the total metal amount excluding lithium) of the lithium nickel-manganese-aluminium-based composite oxide may be greater than about 0 mol%, greater than, or equal to, about 0.1 mol%, greater than, or equal to, about 0.5 mol%, or greater than, or equal to, about 1 mol%, for example, greater than about 0 mol% and equal to or less than about 3 mol%, about 1 mol% to about 3 mol%, about 1 mol% to about 2.5 mol%, about 1 mol% to about 2 mol%, or about 1.5 mol% to about 2.5 mol%. If (e.g., when) the aluminium content (e.g., amount) satisfies the disclosed ranges, a stable layered structure may be maintained even if (e.g., when) cobalt is excluded, and (e.g., the problem of) structure collapse due to charging and discharging may be suppressed or reduced, and long cycle-life characteristics of the positive electrode active material may be achieved or realized.

According to one or more embodiments, the concentration of aluminium within the core particles may be substantially uniform. For example, a concentration gradient of aluminium from the center of a core particle to the surface of the core particle may not exist within each of the core particles. In some embodiments, the aluminium concentration in an inner portion of the core particle may be neither higher nor lower than in any other portion (e.g., an outer portion), of the core particle such that the aluminium within the core particle may be evenly distributed. For example, a structure as described herein may be obtained by using an aluminium raw material during precursor production without additional doping of aluminium during the synthesis of the core particles and thereby synthesizing a composite oxide using nickel-manganese-aluminium-based hydroxide as a precursor. In some embodiments, the core particles may be in a form of a secondary particle in which a plurality of primary particles are agglomerated (e.g., a plurality of secondary particles each being an agglomeration of a plurality of primary particles), and the aluminium content (e.g., amount) inside the primary particles may each be substantially the same (or similar), e.g., regardless of the location of the primary particles. For example, if (e.g., when) one of the primary particles is selected at a random position (e.g., in the cross-section of a secondary particle) and the aluminium content (e.g., amount) is measured inside the primary particle rather than at its interface, the aluminium content (e.g., amount) may be substantially the same, (e.g., similar or uniform). For example, the aluminium content may be substantially the same, (e.g., similar or uniform) regardless of the location of the primary particle, (i.e., whether the primary particle is close to the center of the surface of the secondary particle). In this structure, a stable layered structure may be maintained even if (e.g., when) cobalt is absent, or is present in a very small amount, and aluminium by-products or aluminium aggregates may not be generated, so that the capacity, efficiency, and cycle-life characteristics of the positive electrode active material may be improved at the same time.

The layered lithium nickel-manganese-based composite oxide may be represented by Chemical Formula 1.

**Chemical Formula 1**       $Li_{a1}Ni_{x1}Mn_{y1}Al_{z1}M^1w_1O_{2-b1}X_{b1}$

In Chemical Formula 1, $0.9 \leq a1 \leq 1.8$, $0.6 \leq x1 \leq 0.8$, $0.1 \leq y1 \leq 0.4$, $0 \leq z1 \leq 0.03$, $0 \leq w1 \leq 0.3$, $0.9 \leq x1+y1+z1+w1 \leq 1.1$, and $0 \leq b1 \leq 0.1$. In Chemical Formula 1, $M^1$ may be at least one (e.g., one or more) element selected from among B, Ba, Ca, Ce, Cr, Fe, Mg, Mo, Nb, Si, Sn, Sr, Ti, V, W, Y, and Zr, and X may be at least one (e.g., one or more) element selected from among F, P, and S.

In Chemical Formula 1 according to one or more embodiments, $0.9 \leq a1 \leq 1.5$, or $0.9 \leq a1 \leq 1.2$. Additionally, Chemical Formula 1 may contain aluminium, in which case $0.6 \leq x1 \leq 0.8$, $0.1 \leq y1 \leq 0.39$, $0.01 \leq z1 \leq 0.03$, and $0 \leq w1 \leq 0.29$ may be satisfied, or, for example, $0.6 \leq x1 \leq 0.8$, $0.1 \leq y1 \leq 0.39$, $0.01 < z1 \leq 0.03$, and $0 \leq w1 \leq 0.29$ may be satisfied.

In Chemical Formula 1, for example, $0.6 \leq x1 \leq 0.79$, $0.6 \leq x1 \leq 0.78$, $0.6 \leq x1 \leq 0.75$, $0.65 \leq x1 \leq 0.8$, or $0.7 \leq x1 \leq 0.79$, $0.1 \leq y1 \leq 0.35$, $0.1 \leq y1 \leq 0.30$, $0.1 \leq y1 \leq 0.29$, $0.15 \leq y1 \leq 0.39$, or $0.2 \leq y1 \leq 0.3$, $0.01 \leq z1 \leq 0.025$, $0.01 < z1 \leq 0.02$, or $0.01 < z1 \leq 0.019$, and $0 \leq w1 \leq 0.28$, $0 \leq w1 \leq 0.27$, $0 \leq w1 \leq 0.26$, $0 \leq w1 \leq 0.25$, $0 \leq w1 \leq 0.24$, $0 \leq w1 \leq 0.23$, $0 \leq w1 \leq 0.22$, $0 \leq w1 \leq 0.21$, $0 \leq w1 \leq 0.2$, $0 \leq w1 \leq 0.15$, $0 \leq w1 \leq 0.1$, or $0 \leq w1 \leq 0.09$.

For example, the layered lithium nickel-manganese-based composite oxide may exclude (e.g., not include or contain) cobalt or may include (e.g., contain) a small amount of cobalt, e.g., the cobalt content (e.g., amount) may be about 0 mol% to about 0.01 mol% based on 100 mol% of a total metal amount excluding lithium.

The core particles may be in the form of secondary particles made by agglomerating a plurality of primary particles e.g., each secondary particle may be an agglomeration of a plurality of primary particles. The secondary particles may be spherical, elliptical, polyhedral, or irregular in shape and the primary particles may be spherical, elliptical, plate-shaped, and/or a (e.g., any suitable) combination thereof.

The core particles may be chemically reactive (e.g., susceptible to chemical attacks from) with components in an electrolyte. For example, if (e.g., when) a battery is operated under high-voltage or high-temperature conditions, more side reactions with the electrolyte may occur, resulting in increasing an amount of gas generation that may deteriorate battery cycle-life and safety. However, these potential problems may be solved by including (e.g., introducing) a coating layer according to one or more embodiments on the core particles, as described in more detail elsewhere herein.

**Coating Layer**

A positive electrode active material according to one or more embodiments includes a coating layer located on the surface of the core particles and including Al and P. The coating layer may improve structural stability of the core particles (e.g., including the layered lithium nickel-manganese-based composite oxide) and effectively suppress or reduce a side reaction of the positive electrode active material with an electrolyte solution. The coating layer may also promote conduction of lithium ions and reduce electrical resistance thereby increasing initial discharge capacity and charge/-discharge efficiency of a rechargeable lithium battery and concurrently (e.g., simultaneously), improve high-temperature cycle-life characteristics and high-temperature storage characteristics.

In the coating layer, the presence of Al and P may be examined and determined through characterization analyses such as scanning electron microscope energy dispersive spectroscopy (SEM-EDS), x-ray photoelectron spectroscopy (XPS), and/or the like. The coating layer may include, for example, at least one (e.g., one or more of) selected from among a P-O bond, a P=O bond, an Al-O bond, an Al=O bond, and a P-O-Al bond. The coating layer may include, for example, aluminium phosphate. The coating layer may further include aluminium oxide (eg., $Al_2O_3$), lithium aluminium oxide (eg., $LiAlO_2$), and/or a combination thereof in addition to aluminium phosphate (eg., $AlPO_4$). For example, the coating layer may include lithium-aluminium oxide and aluminium phosphate, for example, $LiAlO_2$, and $AlPO_4$.

In one or more embodiments, the positive electrode active material may include a first coating layer and a second coating layer located on the surface of the core particles. The first coating layer may include aluminium oxide and a second coating layer is located on the first coating layer and includes aluminium phosphate. For example, the positive electrode active material may include a coating layer with a double-layer structure. The first coating layer may include aluminium oxide, lithium-aluminium oxide, and/or a (e.g., any suitable) combination thereof, for example, $LiAlO_2$. The second coating layer may include (e.g., contain) both (e.g., simultaneously) Al and P, for example, the second coating layer may include $AlPO_4$.

In one or more embodiments, according to a manufacturing method of the positive electrode active material, as described in more detail elsewhere herein, the Al coating step (e.g., act or task) may be first performed by adding the core particles to an aluminium-containing coating solution and mixing them (e.g., the core particles and the aluminium-containing coating solution), and then, a phosphorus-based coating raw material is added thereto to form a P coating layer on the Al coating layer. Accordingly, this method may provide a positive electrode active material having the first coating layer including Al or aluminium oxide on the core particles and the second coating layer arranged on the first coating layer and including P and aluminium phosphate. Unlike one or more embodiments, if (e.g., when) P is first coated, for example, $PO_4^{3-}$ ions may react with $Li^+$ ions of the core particles to generate lithium phosphates such as $Li_3PO_4$ and/or the like, resulting in structural changes on the surface of the positive electrode active material and reducing reversible capacity. However, if (e.g., when) the first and second coatings proceed (e.g. are layered) in the order according to one or more embodiments, structural stability of the core particles may be further reinforced. For example, conduction of lithium ions may be increased or promoted, resulting in decreasing electrical resistance and thus increasing reversible capacity and improving cycle-life characteristics high temperature characteristics (e.g., of a rechargeable lithium battery). According to the method of one or more embodiments, the positive electrode active material may include aluminium oxide, lithium aluminium oxide, aluminium phosphate, and/or a (e.g., any suitable) combination thereof on the surface but may exclude (e.g., not include) lithium phosphate.

An Al content (e.g., amount) in the coating layer may be about 0.5 mol% to about 3 mol%, for example, about 0.5 mol% to about 2.5 mol%, about 0.5 mol% to about 2 mol%, or about 0.5 mol% to about 1.5 mol% based on 100 mol% of a total element amount excluding lithium and oxygen in the positive electrode active material. In one or more embodiments, a P content (e.g., amount) in the coating layer may be about 0.1 mol% to about 2 mol%, for example, about 0.1 mol% to about 1.5 mol%, about 0.1 mol% to about 1 mol%, about 0.1 mol% to about 0.9 mol%, or about 0.1 mol% to about 0.5 mol% based on 100 mol% of a total element amount excluding lithium and oxygen in the positive electrode active material. If (e.g., when) the Al and P contents (e.g., amounts) each respectively satisfy the disclosed ranges, the structural stability of the layered lithium nickel-manganese-based composite oxide is improved and conduction of lithium ions is promoted, thereby improving initial discharge capacity, charge/discharge efficiency, high-temperature cycle-life characteristics and high-temperature storage characteristics of a rechargeable lithium battery concurrently (e.g., simultaneously).

In one or more embodiments, the Al content (e.g., amount) based on 100 at% of a total element excluding lithium on the surface of the positive electrode active material measured by scanning electron microscope energy dispersive spectroscopy (SEM-EDS) may be about 5 at% to about 35 at%, for example, about 5 at% to about 30 at%, about 5 at% to about 25 at%, about 6 at% to about 20 at%, or about 7 at% to about 15 at%. In one or more embodiments, the P content (e.g., amount) based on 100 at% of a total element amount excluding lithium on the surface of the positive electrode active material measured by SEM-EDS may be about 0.1 at% to about 8 at%, for example, about 0.5 at% to about 7 at%, about 2 at% to about 6 at%, or about 2 at% to about 5 at%. The total elements (e.g., on the surface of the positive electrode active material measured) may be, for example, selected from among Li, Ni, Mn, Al, Ti, O, and C. If (e.g., when) the Al and P contents (e.g., amounts) on the surface of the positive electrode active material each satisfy the disclosed ranges, the initial charge/discharge capacity, initial charge/discharge efficiency, high-temperature cycle-life characteristics, and high-temperature storage characteristics of a rechargeable lithium battery using this may be improved at the same time (e.g., concurrently). The contents of Al and P may be calculated by analyzing the contents of elements on the surface of the positive electrode active material using SEM-EDS equipment (FEI Titan 80-300 of Philips) and calculating the Al content and P content based on all elements excluding lithium, and for example, the Al content and P content may be calculated based on the total contents of C, O, Al, P, Mn, and Ni. On the surface of the positive electrode active material, a ratio (Al/P) of Al content (e.g., amount) to P content (e.g., amount) may be or satisfy greater than, or equal to, about 2, for example, about 2 to about 10, about 2 to about 8, about 2 to about 6, about 2 to about 4, or about 2 to about 3. If (e.g., when) the disclosed ratios are satisfied, the initial charge/discharge capacity, initial charge/discharge efficiency, high-temperature cycle-life, and high-temperature storage characteristics of the rechargeable lithium battery may be improved at the same time (e.g., concurrently).

The coating layer according to one or more embodiments may be in the form of a film around (e.g., that continuously surrounds) the surface of each of the core particles, and, for example, may be in the form of a shell around (e.g., that continuously surrounds) the entire surface of the core particle. This may be different (e.g., distinct) from a structure in which only a portion of the surface of each of the core particles is partially coated. According to one or more embodiments, the coating layer may be formed to entirely cover the surface of the core particles and may be formed to be very thin and substantially uniform in thickness. For example, the positive electrode active material may not increase electrical resistance or decrease capacity, improve structural stability, effectively suppress side reactions with electrolytes, reduce the amount of gas generated under high-voltage and high-temperature conditions, and achieve long cycle-life characteristics.

The coating layer may have a thickness of about 5 nanometer (nm) to about 500 nm, for example, about 5 nm to about 400 nm, about 5 nm to about 300 nm, about 5 nm to about 200 nm, about 5 nm to about 100 nm, or about 10 nm to about 50 nm. If (e.g., when) the coating layer is within or satisfies the described thickness ranges, the structural stability of the positive electrode active material may be improved without increasing electrical resistance or reducing capacity (e.g., resulting from or due to the coating), and the side reaction(s) with the electrolyte may be effectively suppressed or reduced. The thickness of the coating layer may be measured through, for example, scanning electron microscopy (SEM), transmission electron microscopy (TEM), time-of-flight secondary ion mass spectrometry (TOF-SIMS), XPS, or energy dispersive spectroscopy (EDS) analysis, and, for example, may be measured through EDS line profile analysis of the cross-section of the positive electrode active material.

The coating layer according to one or more embodiments may be thin and substantially uniform in thickness, at the level of tens to hundreds of nanometers. For example, a deviation in coating layer thickness in one positive electrode active material particle may be less than, or equal to, about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the disclosed ranges indicates (e.g., refers to) that a coating layer of substantially uniform thickness is formed in a form of a good or suitable film on the surface of the positive electrode active material particle. That is, the fact that the deviation or standard deviation of the coating layer thickness meets the above disclosed ranges signifies that the coating layer of substantially uniform thickness is effectively formed as a high-quality film on the surface of the positive electrode active material particle. Accordingly, the structural stability of the positive electrode active material is improved, side reactions with the electrolyte may be effectively suppressed or reduced, and the increase in electrical resistance or decrease in capacity due to coating may be minimized or reduced.

The coating layer may further contain nickel, manganese, and/or a (e.g., any suitable) combination thereof in addition to aluminium.

An average particle diameter ($D_{50}$) of (e.g., the secondary particles of) the positive electrode active material according to one or more embodiments is not particularly limited, but may be, for example, about 1 micrometer ($\mu$m) to about 25 $\mu$m, about 5 $\mu$m to about 25 $\mu$m, about 10 $\mu$m to about 25 $\mu$m, about 11 $\mu$m to about 20 $\mu$m, or about 12 $\mu$m to about 18 $\mu$m. As used herein, if (e.g., when) a definition is not otherwise provided, the average particle diameter refers to a diameter ($D_{50}$) of particles having a cumulative volume of 50 volume% in the particle size distribution that is obtained by measuring the size (diameter or major axis length) of about 20 particles at random in a scanning electron microscope image for positive electrode active materials. If (e.g., when) the average particle diameter of the positive electrode active material satisfies the disclosed ranges, high capacity and long cycle-life can be realized and it can be advantageous to form a coating layer according to one or more embodiments.

Additionally, in one or more embodiments, the (or another) positive electrode active material may not contain sodium. In general, sodium ions can be used in the preparing process of a positive electrode active material, but according to the preparing method described in more detail elsewhere herein, core particles with a stable structure and a coating layer of substantially uniform thickness can be formed without using sodium ions.

In one or more embodiments, the positive electrode active material according to one or more embodiments may contain a sulfur (S) component on the surface, which may be caused by a coating raw material, as described in more detail elsewhere herein.

## Method of Preparing Positive Electrode Active Material

In one or more embodiments, a method of preparing a positive electrode active material includes (i) preparing core particles including a layered lithium nickel-manganese-based composite oxide having a nickel content (e.g., amount) of greater than, or equal to, about 60 mol% based on 100 mol% of a total metal amount excluding lithium, (ii) adding an aluminium raw material to an aqueous solvent and mixing them (e.g., the aluminium raw material and the aqueous solvent) to prepare preparing a coating solution, (iii) adding the core particles to the coating solution and mixing them (e.g., the core particles and the coating solution) to prepare a first mixed solution, (iv) adding a phosphorus-based raw material to the first mixed solution and mixing them (e.g., the phosphorus-based raw material and the first mixed solution) to prepare a second mixed solution, and (v) removing an aqueous solvent from the second mixed solution, drying a resultant product, and heat treating the resultant product it to obtain the positive electrode active material. The aforementioned positive electrode active material may be prepared through the method described herein.

The layered lithium nickel-manganese-based composite oxide may be prepared, for example, by mixing a layered nickel-manganese-based composite hydroxide and a lithium raw material and performing a first heat treatment. The nickel-manganese-based composite hydroxide may be a precursor of core particles and may be in the form of secondary particles in which a plurality of primary particles are agglomerated, e.g., each secondary particle being an agglomeration of a plurality of primary particles. The nickel-manganese-based composite hydroxide (e.g. nickel-manganese-based composite hydroxide) may be prepared by a general coprecipitation method.

The nickel content (e.g., amount) is or satisfies greater than, or equal to, about 60 mol% and may be, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal amount in the nickel-manganese-based composite hydroxide. If (e.g., when) the nickel content (e.g., amount) satisfies the described ranges, high capacity may be achieved and structural stability may be increased, e.g., even if (e.g., when) the cobalt content (e.g., amount) is reduced.

The manganese content (e.g., amount) may be greater than, or equal to, about 15 mol%, for example, about 15 mol% to about 40 mol%, about 15 mol% to about 39 mol%, about 15 mol% to about 35 mol%, about 15 mol% to about 30 mol%, or about 20 mol% to about 30%, and/or the like based on 100 mol% of a total metal amount in the nickel-manganese-based composite hydroxide.

In one or more embodiments, if (e.g., when) the nickel-manganese-based composite hydroxide further contains aluminium, the aluminium content (e.g., amount) may be greater than, or equal to, about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%, based on 100 mol% of a total metal amount. If (e.g., when) the manganese and aluminium contents (e.g., amounts) of the composite hydroxide satisfy the disclosed ranges, high capacity may be realized while structural stability of the positive electrode active material may be increased, and production price may be lowered to increase economic efficiency.

In a method for preparing a positive electrode active material according to one or more embodiments, in the preparation of the core particles, aluminium may not be additionally doped, but an aluminium raw material may be used to prepare a precursor, so that a nickel-manganese-aluminium-based composite hydroxide, in which aluminium is uniformly (e.g., substantially uniformly) dispersed in the structure, may be used as the precursor. If (e.g., when) such a precursor is used, the positive electrode active material may stably maintain a layered structure without cobalt, e.g., despite repeated charges and discharges, and aluminium byproducts or aluminium aggregates may not be formed, improving capacity and efficiency characteristics and cycle-life characteristics of the positive electrode active material.

The cobalt content (e.g., amount) in the nickel-manganese-based composite hydroxide may be less than, or equal to, about 0.01 mol%, less than or equal to about 0.005 mol%, or less than or equal to about 0.001 mol%, based on 100 mol% of a total metal amount. This nickel-manganese-based composite hydroxide may be economical because it avoids the increase in unit cost caused by cobalt, maximizes capacity, and improves structural stability.

For example, the nickel-manganese-based composite hydroxide may be represented by Chemical Formula 2.

**Chemical Formula 2** $\quad\quad$ $Ni_{x2}Mn_{y2}Al_{z2}M^2{}_{w2}(OH)_2$

In Chemical Formula 2, $0.6 \leq x2 \leq 0.8$, $0.1 \leq y2 \leq 0.4$ $0 \leq z2 \leq 0.03$, $0 \leq w2 \leq 0.3$, and $0.9 \leq x2+y2+z2+w2 \leq 1.1$, and $M^2$ may be at least one (e.g., one or more) elements selected from among B, Ba, Ca, Ce, Cr, Fe, Mg, Mo, Nb, Si, Sn, Sr, Ti, V, W, Y, and Zr.

In Chemical Formula 2, for example, $0.6 \leq x2 \leq 0.8$, $0.1 \leq y2 \leq 0.39$, $0.01 \leq z2 \leq 0.03$, and $0 \leq w2 \leq 0.29$.

The nickel-manganese-based composite hydroxide may be in the form of particles, and the average particle diameter ($D_{50}$) of the particles may be about 1 $\mu$m to about 25 $\mu$m, about 5 $\mu$m to about 20 $\mu$m, about 10 $\mu$m to about 20 $\mu$m, about 11 $\mu$m to about 18 $\mu$m, or about 12 $\mu$m to about 15 $\mu$m.

The nickel-manganese-based composite hydroxide and lithium raw material may be mixed in a molar ratio of about 1:0.9 to about 1:1.8, for example, about 1:0.9 to about 1:1.5 or about 1:0.9 to about 1:1.2. The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. The layered lithium nickel-manganese-based composite oxide may be obtained through heat treatment. The obtained composite oxide may be substantially the same as that (e.g., the composite oxide) described herein for the core particles in the positive electrode active material.

Because a layered lithium nickel-manganese-based composite oxide may have significantly different residual lithium contents (e.g., amounts) on the particle surface and one or more different suitable characteristics from oxides with a different composition, for example, lithium nickel-cobalt-manganese-based composite oxide, lithium nickel-cobalt-aluminium-based composite oxide, lithium cobalt-based oxide, and/or the like, it may be impractical (e.g., nearly impossible) to form a satisfactory coating layer in the form of a uniform film in a conventional coating method. In one or more embodiments, a method of coating the surface of a layered lithium nickel-manganese-based composite oxide particle with Al and P each at a very substantially uniform thickness is contemplated or proposed. In one or more embodiments, a method is envisioned for applying a coating of aluminium (Al) and phosphorus (P) to the surface of layered lithium nickel-manganese-based composite oxide particles, ensuring a substantially uniform thickness throughout.

In one or more embodiments, a coating solution is first prepared by adding an aluminium raw material to an aqueous solvent and mixing them, (e.g., the aluminium raw material and the aqueous solvent), and then core particles are added to the coating solution and mixed. This may be contemplated as a salt-solution wet coating method and may be referred to as a "pre-addition method" in which the salt, which is the coating raw material, is first completely dissolved and then the positive electrode active material particles are added.

The aqueous solvent may include distilled water, an alcohol-based solvent, and/or a (e.g., any suitable) combination thereof.

The aluminium raw material may be aluminium sulfate. The aluminium sulfate may be contemplated or referred to as an optimal or suitable raw material for forming a substantially uniform Al coating layer on the layered lithium nickel-manganese-based composite oxide.

The Al content (e.g., amount) in the aluminium raw material may be (e.g., designed to be) about 0.1 mol% to about 3.0 mol%, for example, about 0.5 mol% to about 3.0 mol%, about 0.1 mol% to about 2.0 mol%, about 0.5 mol% to about 1.5 mol%, about 0.6 mol% to about 1.4 mol%, about 0.7 mol% to about 1.3 mol%, or about 0.8 mol% to about 1.2 mol% based on 100 mol% of a total element amount excluding lithium and oxygen in the core particles and aluminium of the aluminium raw material. If (e.g., when) the Al coating content (e.g., amount) is (e.g., designed) within the disclosed ranges, the coating layer may be formed to have a thin and substantially uniform thickness of tens to hundreds of nanometers, reducing an amount of gas generated by rechargeable lithium batteries under high-voltage or high-temperature operation conditions and improving high-capacity and long cycle-life characteristics. For example, if (e.g., when) the aluminium coating content falls within the specified ranges, the resulting coating layer achieves a thin and substantially uniform thickness ranging from tens to hundreds of nanometers. This contributes to a reduction in gas generation for rechargeable lithium batteries under high-voltage or high-temperature conditions, thereby enhancing their capacity and extending their cycle life.

The adding and mixing of the aluminium raw material into an aqueous solvent may proceed for approximately about 1 minute to about 60 minutes, for example, about 1 minute to about 30 minutes, about 3 minutes to about 30 minutes, or about 5 minutes to about 10 minutes. Additionally, the mixing speed may be about 100 rpm to about 800 rpm, for example, about 200 rpm to about 600 rpm, or about 250 rpm to about 500 rpm. Under these conditions, the aluminium raw material may be completely dissolved in the aqueous solvent to obtain a colorless transparent coating solution, and this coating solution may be used to effectively form the substantially uniform coating layer according to one or more embodiments. In the adding of the core particles to the prepared coating solution, while stirring the coating solution, the core particles may be added thereto to increase coating quality.

In one or more embodiments, a pH of the coating solution is 1.5 to 4, an amount of time taken to add the core particles to the coating solution may be about 30 seconds per about 500 gram (g) to about 2 minutes per about 500 g, for example, about 30 seconds per about 500 g to about 1.5 minutes per about 500 g, and/or the like. The timing or speed of adding the core particles may be appropriately or suitably adjusted to control a pH of a supernatant after completing the coating, thereby inducing effective formation of the substantially uniform coating layer according to one or more embodiments. If (e.g., when) the timing or speed of adding the core particles is too slow, the reaction rate for each particle may vary and a substantially uniform coating layer may not be formed. Additionally, if (e.g., when) the timing or speed at which the core particles are added is too fast, the pH may change quickly and a substantially uniform coating layer may not be formed.

After the entire amount of the core particles is added to the coating solution, the stirring may be performed for about 15 minutes to about 60 minutes, for example, about 20 minutes to about 50 minutes, or about 30 minutes to about 45 minutes. The amount of time required or taken from starting the adding of the core particles to the coating solution to completion of the stirring, that is, the time for preparing the first mixed solution may be adjusted within about 1 hour.

In one or more embodiments, if (e.g., when) the core particles are added to the coating solution and mixing is stopped, that is, the pH range of the first mixed solution may be about 5.5 to about 8.5. If (e.g., when) the pH of the first mixed solution is less than 5.5, the acidity may become strong and a substantially uniform coating layer may not be formed, and if (e.g., when) the pH is more than 8.5, the alkalinity may become strong, making it difficult to form a substantially uniform Al coating layer.

In the step (e.g., act or task) (iv), the phosphorus-based raw material may be added to the first mixed solution and then, mixed to proceed with the P coating. Herein, the phosphorus-based raw material may be, for example, phosphoric acid ($H_3PO_4$). In one or more embodiments, in the step (e.g., act or task) (iii), the core particle may be added to the Al coating solution and then, mixed to lead the Al coating, and subsequently, in the step (e.g., act or task) (iv), the phosphorus-based raw material may be added thereto and then, mixed to direct or lead the P coating toward or on the outmost surface of the positive electrode active material. As described herein, unlike one or more embodiments, if (e.g., when) P is first coated, for example, $PO_4^{3-}$ ions may react with $Li^+$ ion of the core particle to generate lithium phosphate such as $Li_3PO_4$ and/or the like, resulting in structural changes on the surface of the positive electrode active material and reducing reversible capacity. However, if (e.g., when) the P coating after the Al coating proceeds according to one or more embodiments, structural stability of the core particle may be further reinforced, and conduction of the lithium ions may be promoted, decreasing electrical (electron) resistance and thus increasing reversible capacity and improving cycle-life characteristics and high temperature characteristics.

According to the manufacturing method according to one or more embodiments, the first coating layer including aluminium oxide, lithium-aluminium oxide, and/or a (e.g., any suitable) combination thereof may be formed, and on the first coating layer, the second coating layer including aluminium phosphate may be formed. The aluminium oxide, and/or the like of the first coating layer and the aluminium phosphate of the second coating layer may not be well mixed but exist as separate layers, and in one or more embodiments, the phosphate, which is in the form of anions, may not be substantially or rather diffused into the core particle, but may exist on the outmost surface of the positive electrode active material.

The phosphorus content (e.g., amount) of the phosphorus-based raw material may be 0.1 mol% to 2 mol%, for example, 0.1 mol% to 1.5 mol%, 0.1 mol% to 1 mol%, 0.1 mol% to 0.9 mol%, or 0.1 mol% to 0.5 mol% based on 100 mol% of a total amount of all elements excluding lithium and oxygen in the core particle and the phosphorus of the phosphorus-based raw material. If (e.g., when) the P coating content (e.g., amount) is (e.g., designed to be) within the described ranges, a coating layer with a thin and substantially uniform thickness of tens or hundreds of nanometers may be formed, improving cycle-life characteristics and concurrently (e.g., simultaneously), enhancing initial charge/discharge efficiency under high voltage and high temperature driving conditions.

After adding the phosphorus-based raw material to the first mixed solution, the mixing may be performed for about 15 minutes to about 60 minutes, for example, about 20 minutes to about 50 minutes, or about 30 minutes to about 45 minutes. The amount of time desired or required to prepare the second mixed solution may be appropriately or suitably adjusted within about 1 hour. In one or more embodiments, if (e.g., when) the phosphorus-based raw material, for example, being phosphoric acid, is added to the first mixed solution, the pH may decrease and become acidic and then, increase again, and if (e.g., when) the mixing is completed, the pH of the second mixed solution may be within a range of about 5.5 to about 8.5. If (e.g., when) pH of the second mixed solution is less than about 5.5, a substantially uniform coating layer may not be formed due to strong acidity, and if (e.g., when) pH is greater than about 8.5, it also may be difficult to form a substantially uniform coating layer due to strong basicity.

After removing the aqueous solvent from the second mixed solution, a (e.g., resultant) product therefrom may be, for example, dried at about 40 °C to about 240 °C, about 100 °C to about 220 °C, or about 150 °C to about 200 °C and for example under a vacuum condition, and under these conditions a satisfactory coated product may be obtained.

The resultant product after removing the aqueous solvent from the mixed solution and being dried may be referred to as a coated product. The coated product includes core particles and a coating layer including Al and P on the surface of the core particles. For example, the coating layer including Al and P may include a fiber shape (e.g., in a form of fibers), for example, a form of a mesh or spider web. Such a mesh may be continuously formed over the entire surface of the core particles. The mesh-shaped coating layer may be around (e.g., entirely surround) the core particles with a very thin and substantially uniform thickness to strengthen the surface of the positive electrode active material and improve structural stability and thereby, enhancing high-temperature and high-voltage characteristics.

After mixing the nickel-manganese-based composite hydroxide and the lithium raw material, the heat treatment of the mixture may be referred to as a primary heat treatment, while the heat treatment of the coated product may be referred to as a second (e.g., secondary) heat treatment.

In one or more embodiments, the second heat treatment temperature range may be about 730 °C to about 800 °C, for example, about 740 °C to about 800 °C, about 750 °C to about 800 °C, about 750 °C to about 780 °C, or about 750 °C to about 775 °C. If (e.g., when) the second heat treatment temperature is set to the disclosed ranges, the tendency of aluminium to diffuse into the secondary particle may be reduced and, the aluminium may mainly remain on the surface of the secondary particle. Concurrently, the surface of the secondary particle may be coated in the form of a very thin and uniformly (e.g., substantially uniformly) thick shell, and the P element may also be well coated on the surface of the secondary particle.

If (e.g., when) the second heat treatment temperature exceeds about 800 °C, the tendency of aluminium to diffuse into the secondary particles may increase, making it difficult to form a high-concentration Al-rich coating layer on the surface, and accordingly, the initial charge/discharge capacity and efficiency characteristics at high voltage may be reduced, and cycle-life characteristics at high voltage and high temperature may be reduced. If (e.g., when) the second heat treatment temperature is less than about 730 °C, a portion of the aluminium or the phosphorus component may be aggregated (e.g., agglomerated) or may be distributed substantially unevenly on the surface of the secondary particles, which may result in reduced cycle-life characteristics under high temperature and high voltage conditions and lower initial charge/discharge efficiency.

The second heat treatment may be performed, for example, in an oxygen atmosphere for about 2 to about 20 hours or about 3 to about 10 hours.

The obtained positive electrode active material includes core particles including a layered lithium nickel-manganese-based composite oxide having a nickel content (e.g., amount) of greater than or equal to about 60 mol% based on 100 mol% of a total metal amount excluding lithium, and a coating layer located on the surface of the core particles and including Al and P. In some embodiments, the coating layer may include layered aluminium oxide and aluminium phosphate.

## Positive Electrode

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the aforementioned positive electrode active materials. Additionally, the positive electrode active material layer may optionally further include a binder, a conductive material, and/or a (e.g., any suitable) combination thereof.

According to one or more embodiments, a loading level of the positive electrode active material layer may be about 10 milligram per square centimeter ($mg/cm^2$) to about 40 $mg/cm^2$, for example, about 10 $mg/cm^2$ to about 30 about $mg/cm^2$, or about 10 $mg/cm^2$ to about 20 $mg/cm^2$. Additionally, a density of the positive electrode active material layer in the final compressed positive electrode may be about 3.3 gram per cubic centimeter (g/cc) to about 3.7 g/cc, for example about 3.3 g/cc to about 3.6 g/cc or about 3.4 g/cc to about 3.58 g/cc. If (e.g., when) applying the positive electrode active material according to one or more embodiments, it is advantageous to implement such a loading level and positive electrode density, and a positive electrode that satisfies the loading level and positive electrode density in the disclosed ranges is suitable for implementing a high-capacity, high-energy-density rechargeable lithium battery.

## Binder

The binder may improve binding properties of positive electrode active material particles with one another and/or with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

## Conductive Material

The conductive material (e.g., electron conductor) may be included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al, but the present disclosure is not limited thereto.

## Rechargeable Lithium Battery

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

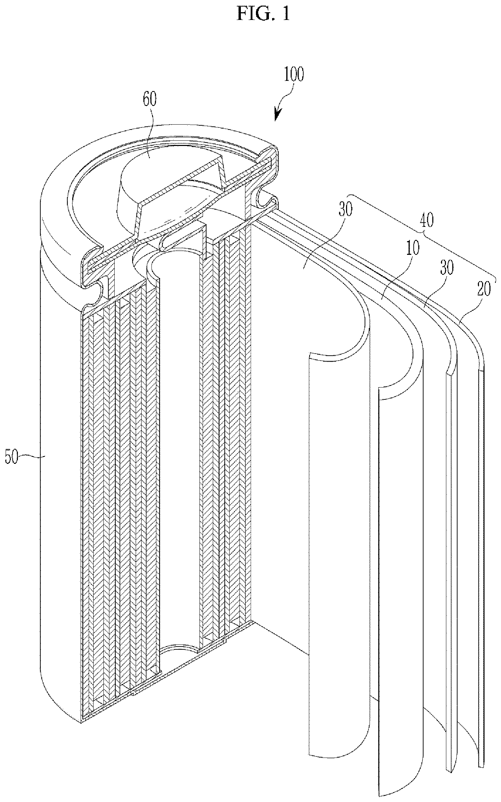

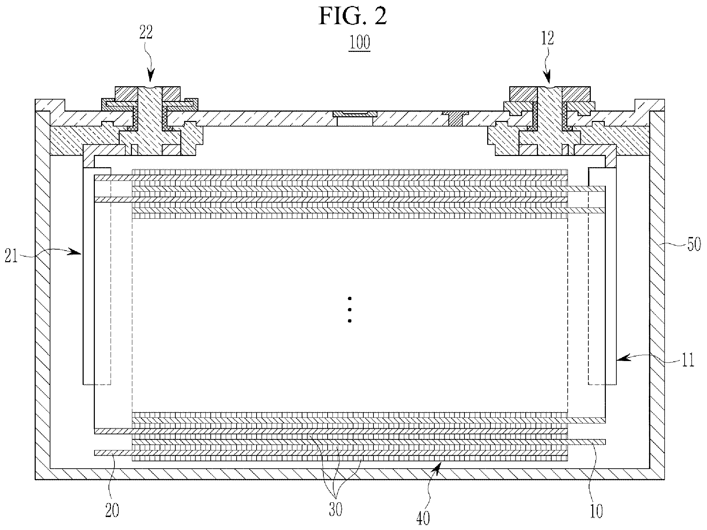

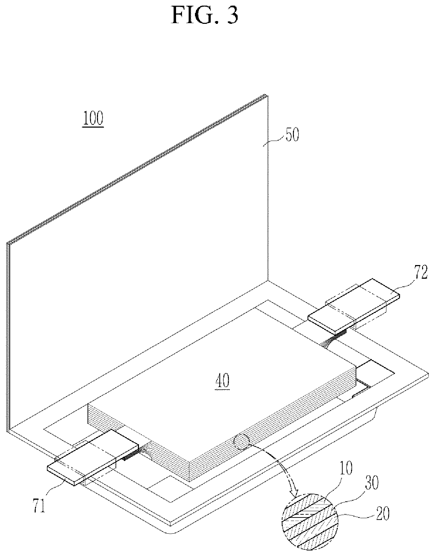

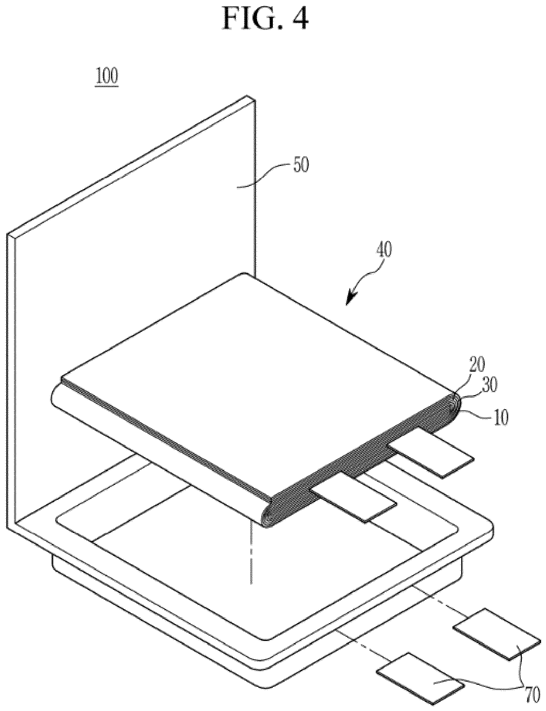

The rechargeable lithium battery may be classified into cylindrical, prismatic, pouch, coin, and/or the like, e.g., depending on the shape. FIGS. 1 to 4 are schematic diagrams showing the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes electrode tabs, that is, a positive electrode tab 71 and a negative electrode tab 72, or electrode tabs 130, respectively, serving as an electrical path for inducing the current formed in the electrode assembly 40 to the outside.

The rechargeable lithium battery according to one or more embodiments may be rechargeable at a high voltage or may be suitable for being driven at a high voltage. For example, the charging voltage of a rechargeable lithium battery may be greater than, or equal to, about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery may significantly reduce an amount of gas generated even if (e.g., when) charged at high voltage and may achieve high capacity and long cycle-life characteristics.

## Negative Electrode

The negative electrode may include a current collector and a negative electrode active material layer on the current collector, and the negative electrode active material layer may further include a negative electrode active material, a binder, a conductive material, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and at least one (e.g., one or more) metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, $SnO_x$ ($0 < x \leq 2$), e.g., $SnO_2$, a Sn alloy, and/or a (e.g., any suitable) combination thereof.

The silicon-carbon composite may be a composite of silicon and amorphous carbon. An average particle diameter ($D_{50}$) of the silicon-carbon composite particles may be, for example, about 0.5 $\mu$m to about 20 $\mu$m. According to one or more embodiments, the silicon-carbon composite may be in the form of silicon particles and amorphous carbon coated on the surface of the silicon particles. For example, it may include a secondary particle (core) (e.g., a plurality of secondar particles (cores) in (e.g., each) which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be (may exist) dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

Additionally, a thickness of the amorphous carbon coating layer may be about 5 nanometer (nm) to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of a silicon alloy, or in an oxidized form. The oxidized form of silicon may be represented by $SiO_x$ ($0 < x \leq 2$). In some embodiments, the atomic content (e.g., amount) ratio of Si:O, which indicates a degree of oxidation, may be about 99:1 to about 33:67. As used herein, if (e.g., when) a definition is not otherwise provided, an average particle diameter ($D_{50}$) indicates a particle where an accumulated volume is about 50 volume% in a particle distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, the mixing ratio may be a weight ratio of about 1:99 to about 90:10.

**Binder**

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

## Conductive Material

The conductive material (e.g., the electron conductor) is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

## Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

## Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g.,

when) two or more types (kinds) are used in a mixture, a mixing ratio can be appropriately or suitably adjusted according to the desired or suitable battery performance, which is widely suitable to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the disclosed range, the electrolyte has appropriate or suitable ionic conductivity and viscosity, and thus excellent or suitable performance can be achieved and lithium ions can move effectively.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one surface or both surfaces (e.g., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_s$, $BaTiO_s$, $Mg(OH)_2$, boehmite, and/or a (e.g., any suitable) combination thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 μm to about 20 μm, for example, about 1 μm to about 10 μm, or about 1 μm to about 5 μm.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

Examples and comparative examples of the present disclosure are described in more detail herein. However, the following examples are only examples of one or more embodiments of the present disclosure, and the present disclosure is not limited to the following examples.

**EXAMPLES**

**Example 1**

**1. Preparation of Positive Electrode Active Material**

$Ni_{0.75}Mn_{0.24}Al_{0.01}(OH)_2$ and LiOH were mixed in a molar ratio of 1:1.05 and then, primarily heat-treated at 845 °C under an oxygen atmosphere for 8 hours to prepare a layered lithium nickel-manganese-based composite oxide in a form of secondary particles having a composition of $Li_{1.05}Ni_{0.75}Mn_{0.24}Al_{0.01}O_2$ and an average particle diameter ($D_{50}$) of about 14 micrometer ($\mu$m).

A coating solution was prepared by adding aluminium sulfate with 600 g of distilled water to a 1 L reactor and then, stirring the mixture at about 350 rpm for about 5 minutes to dissolve the aluminium sulfate. As the aluminium sulfate were completely dissolved, the coating solution was checked to be colorless transparent. Subsequently, 500 g of the layered lithium nickel-manganese-based composite oxide was added to the coating solution, which was being stirred, for 1.5 minutes and then, kept being stirred for about 30 minutes to prepare a first mixed solution. Herein, an aluminium content (e.g., amount) of the aluminium sulfate was designed to be 1 mol% based on 100 mol% of all elements excluding lithium and oxygen in the core particles and aluminium of the aluminium sulfate. After completing the stirring, a pH of the first mixed solution was confirmed to be 6.6. Subsequently, $H_3PO_4$ was added to the first mixed solution and then, stirring was continued for 30 minutes to prepare a second mixed solution. A P content (e.g., amount) of the phosphoric acid was designed to be 0.1 mol% based on 100 wt% of all the elements excluding lithium and oxygen in the core particles and phosphorous of $H_3PO_4$. The pH of the solution decreased due to the addition of phosphoric acid and after the stirring, increased again and then, was maintained at about 6.6.

Subsequently, the solvent was removed from the second mixed solution with an aspirator and a filter press, and vacuum-drying was performed at 190 °C, obtaining a coated product. Subsequently, the solvent was extracted from the second mixed solution using an aspirator and a filter press, resulting in an intermediate product. This intermediate product was then vacuum-dried at 190°C to obtain the coated product.

The coated product was secondarily heat-treated at 750 °C for 8 hours under an oxygen atmosphere to obtain the final positive electrode active material.

**2. Manufacturing of Coin Cell**

98.5 wt% of the positive electrode active material, 1.0 wt% of a polyvinylidene fluoride binder, and 0.5 wt% of a carbon nanotube conductive material were mixed to prepare a positive electrode active material layer slurry, and the slurry was coated on an aluminium foil current collector and then, dried and compressed to manufacture a positive electrode. Herein, a loading level of the positive electrode active material layer was 10 milligram per square centimeter ($mg/cm^2$), and a density of the finally compressed positive electrode was about 3.4 gram per cubic centimeter (g/cc).

The positive electrode was used with a lithium metal as a counter electrode and a polytetrafluoroethylene separator, and in one or more embodiments, an electrolyte solution prepared by dissolving 1 M $LiPF_6$ in a mixed solvent of ethylene carbonate and dimethyl carbonate in a volume ratio of 3:7 was used to manufacture a coin cell in a common method.

**Example 2**

A positive electrode active material and a coin cell were manufactured in substantially the same manner as Example 1 except that the P content of phosphoric acid was changed to 0.3 mol% based on 100 wt% of all the elements excluding lithium and oxygen in the final positive electrode active material.

**Example 3**

A positive electrode active material and a coin cell were manufactured in substantially the same manner as Example 1 except that the P content (e.g., amount) of phosphoric acid was changed to 0.5 mol% based on 100 wt% of all the elements excluding lithium and oxygen in the final positive electrode active material.

**Comparative Example 1**

A positive electrode active material and a coin cell were manufactured in substantially the same manner as in Example 1 except that the layered lithium nickel-manganese-based composite oxide itself (i.e., without the Al and P coating) was used as the positive electrode active material.

**Comparative Example 2**

A positive electrode active material and a coin cell were manufactured in substantially the same manner as in Example 1 except that the positive electrode active material was prepared by performing the Al coating alone without the P coating, that is, filtering and drying the first mixed solution and then, performing a second heat treatment.

**Evaluation Example 1: SEM-EDS Analysis**

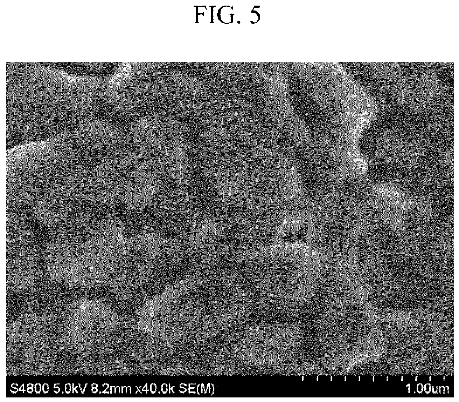

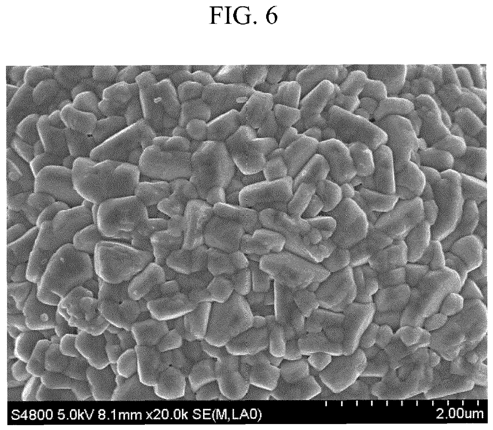

FIG. 5 is an SEM image of the surface of the positive electrode active material coated product prepared in Example 3, and FIG. 6 is an SEM image of the surface of the positive electrode active material prepared in Comparative Example 1. Comparing FIG. 5 and FIG. 6, a type or kind of net-like coating shape is observed on the coated product surface of Example 3.

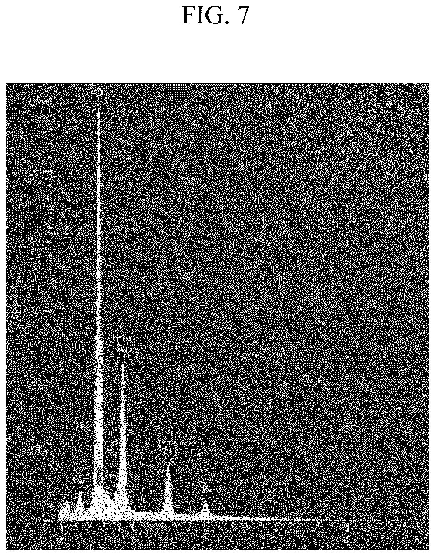

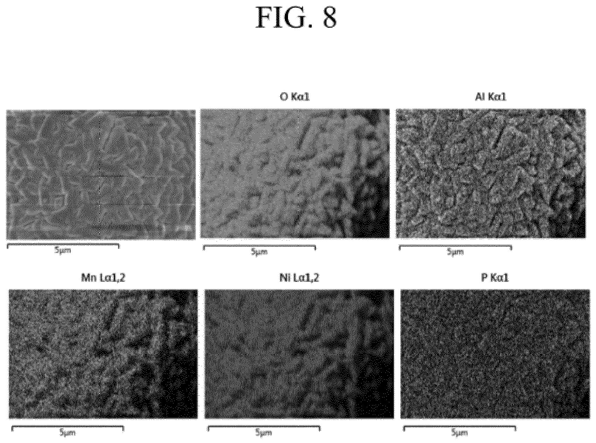

In one or more embodiments, an SEM-EDS analysis on the surface of the coated product of Example 3 was performed to provide a detection intensity graph for each C, O, Mn, Ni, Al, and P element in FIG. 7 and, also, an SEM image (top left) and a mapping image of each O, Al, Mn, Ni, and P element in FIG. 8. Referring to FIG. 7, both (e.g., simultaneously) Al and P elements were detected on the surface of the positive electrode active material coated product, and referring to FIG. 8, both (e.g., simultaneously) Al and P elements were very uniformly (e.g., substantially uniformly) distributed on the surface of the positive electrode active material coated product.

Furthermore, each element content (e.g., amount) on the surface of the coated product of Example 3, which is calculated through the SEM-EDS analysis, is shown in Table 1. Table 1 shows each element content (e.g., amount) based on 100 at% of a total element amount excluding lithium, that is, C+O+Al+P+Mn+Ni on the surface of the positive electrode active material.

Table 1

| Element | Content (at%) |
|---------|---------------|
| C | 6.92 |
| O | 57.38 |
| Al | 7.82 |
| P | 3.46 |
| Mn | 7.81 |
| Ni | 16.61 |

Referring to Table 1, an Al content (e.g., amount) was 7.82 at% based on a total element amount excluding lithium on the coated product surface of Example 3, the P content (e.g., amount) was 3.46 at% based on all the elements excluding lithium on the coated product surface of Example 3, and an Al/P content (e.g., amount) ratio was about 2.26.

**Evaluation Example 2: Evaluation of Initial Charge/discharge Capacity and Efficiency of Battery Cells**

The coin cells of Examples 1 to 3 and Comparative Examples 1 and 2 were charged to an upper limit voltage of 4.45 V at a constant current of 0.2 C and to 0.05 C at a constant voltage and then, discharged to a cut-off voltage of 3.0 V at 0.2 C at 25 °C for initial charge and discharge. In Table 2, initial charge capacity, initial discharge capacity, and a ratio of the initial discharge capacity to the initial charge capacity as efficiency are provided.

**Evaluation Example 3: Evaluation of High-temperature Cycle-life Characteristics**

Following Evaluation Example 2, the cells were 50 times or more repeatedly charged and discharged at 1.0 C within a voltage range of 3.0 V to 4.45 V at 45 °C to calculate a ratio of 50th cycle discharge capacity to the initial discharge capacity, which is shown as high-temperature cycle-life in Table 2.

**Evaluation Example 4: Evaluation of High-temperature Storage Characteristics**

The cells, which were initially charged to 4.45 V in Evaluation Example 1, were stored at 90 °C for 4 hours and then, measured with respect to an amount of gas generated within the cells, and the results are shown in Table 2.

Table 2

|  | Al coating (mol%) | P coating (mol%) | 0.2C charge (mAh/g) | 0.2C discharge (mAh/g) | Efficiency (%) | High-temperature cycle-life (%, 45 °C, 50cyc) | High-temperature storage gas generation amount (mL/g) |
|---|---|---|---|---|---|---|---|
| Ex. 1 | 1.0 | 0.1 | 229.7 | 199.2 | 90.60 | 91.60 | 13.4 |
| Ex. 2 | 1.0 | 0.3 | 229.3 | 198.1 | 90.70 | 90.70 | 13.1 |
| Ex. 3 | 1.0 | 0.5 | 229.5 | 198.3 | 91.50 | 91.50 | 12.3 |
| Comp. Ex. 1 | - | - | 229.5 | 194.4 | 84.7 | 85.50 | 15.2 |
| Comp. Ex. 2 | 1.0 | - | 228.8 | 197.0 | 86.1 | 88.80 | 13.7 |

Referring to Table 2, Examples 1 to 3, compared to Comparative Examples 1 and 2, exhibited improved initial discharge capacity, enhanced initial charge/discharge efficiency, much improved high-temperature cycle-life characteristics, and much reduced amount of generated gas, if (e.g., when) stored at a high temperature.

A device of preparing a positive electrode active material, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described in connection with what is presently considered to be practical example embodiments, it is to be understood that the present disclosure is not limited to the disclosed embodiments. In contrast, it is intended to cover one or more suitable modifications and equivalent arrangements included within the scope of the appended claims, and equivalents thereof.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |

(continued)

| 71: | positive electrode tab | 72: | negative electrode tab |

Embodiments are set out in the following clauses:

Clause 1. A positive electrode active material, comprising:

a plurality of core particles comprising a layered lithium nickel-manganese-based composite oxide having a nickel amount greater than, or equal to, 60 mol% based on 100 mol% of a total metal amount excluding lithium; and
a coating layer on a surface of the core particles and comprising aluminium (Al) and phosphorus (P).

Clause 2. The positive electrode active material of clause 1, wherein
the coating layer comprises aluminium phosphate.

Clause 3. The positive electrode active material of clause 1, wherein
the coating layer comprises aluminium oxide and aluminium phosphate.

Clause 4. The positive electrode active material of any one of clauses 1 to 3, wherein
the positive electrode active material comprises a first coating layer on the surface of the core particles and comprising aluminium oxide and a second coating layer on the first coating layer and comprising aluminium phosphate.

Clause 5. The positive electrode active material of any one of clauses 1 to 4, wherein

an Al amount in the coating layer is 0.5 mol% to 3 mol% based on 100 mol% of a total element amount excluding lithium and oxygen in the positive electrode active material, and
a P amount in the coating layer is 0.1 mol% to 2 mol% based on 100 mol% of a total element amount excluding lithium and oxygen in the positive electrode active material.

Clause 6. The positive electrode active material of clause 5, wherein

the Al amount in the coating layer is 0.5 mol% to 1.5 mol% based on 100 mol% of the total element amount excluding lithium and oxygen in the positive electrode active material, and
the P amount in the coating layer is 0.1 mol% to 0.9 mol% based on 100 mol% of the total element amount excluding lithium and oxygen in the positive electrode active material.

Clause 7. The positive electrode active material of any one of clauses 1 to 6, wherein
an Al amount is 5 at% to 35 at% and a P amount is 0.1 at% to 8 at% based on 100 mol% of a total element amount excluding lithium on a surface of the positive electrode active material, measured by scanning electron microscope energy dispersive spectroscopy (SEM-EDS).

Clause 8. The positive electrode active material of clause 7, wherein
on the surface of the positive electrode active material, a ratio (Al/P) of the Al amount to the P amount is greater than, or equal to, 2.

Clause 9. The positive electrode active material of any one of clauses 1 to 8, wherein

the coating layer is in a form of a shell around the surface of each of the core particles,
a thickness of the coating layer is 5 nanometer (nm) to 200 nm, and
a deviation of a thickness of the coating layer within one positive electrode active material particle is less than, or equal to, 20%.

Clause 10. The positive electrode active material of any one of clauses 1 to 9, wherein
in the layered lithium nickel-manganese-based composite oxide of the core particles, the nickel amount is 60 mol% to 80 mol% and a manganese amount is greater than, or equal to, 15 mol% based on 100 mol% of the total metal amount excluding lithium.

Clause 11. The positive electrode active material of any one of clauses 1 to 10, wherein
the layered lithium nickel-manganese-based composite oxide of the core particles further comprises aluminium and an aluminium amount in the core particles is 1 mol% to 3 mol% based on 100 mol% of the total metal amount excluding lithium.

Clause 12. The positive electrode active material of clause 11, wherein
a concentration of aluminium in each of the core particles is substantially uniform.

Clause 13. The positive electrode active material of any one of clauses 1 to 12, wherein
in the layered lithium nickel-manganese-based composite oxide of the core particles, a cobalt amount is 0 mol% to 0.01 mol% based on 100 mol% of the total metal amount excluding lithium.

Clause 14. The positive electrode active material of any one of clauses 1 to 13, wherein

the layered lithium nickel-manganese-based composite oxide of the core particles is a positive electrode active material represented by Chemical Formula 1:

Chemical Formula 1        $Li_{a1}Ni_{x1}Mn_{y1}Al_{z1}M^1P_{w1}O_{2-b1}X_{b1}$, and

wherein in Chemical Formula 1,

$$0.9 \leq a1 \leq 1.8,$$

$$0.6 \leq x1 \leq 0.8,$$

$$0.1 \leq y1 \leq 0.4,$$

$$0 \leq z1 \leq 0.03,$$

$$0 \leq w1 \leq 0.3,$$

$$0.9 \leq x1+y1+z1+w1 \leq 1.1,$$

$$0 \leq b1 \leq 0.1,$$

$M^1$ is at least one element selected from among B, Ba, Ca, Ce, Cr, Fe, Mg, Mo, Nb, Si, Sn, Sr, Ti, V, W, Y, and Zr, and
X is at least one element selected from among F, P and S.

Clause 15. The positive electrode active material of any one of clauses 1 to 14, wherein

the core particles are in a form of secondary particles, each of the secondary particles being an agglomeration of a plurality of primary particles, and
an average particle diameter ($D_{50}$) of secondary particles of the positive electrode active material is 10 $\mu$m to 25 $\mu$m.

Clause 16. A method, comprising

preparing core particles comprising a layered lithium nickel-manganese-based composite oxide having a nickel amount of greater than, or equal to, 60 mol% based on 100 mol% of a total metal amount excluding lithium,
adding an aluminium raw material to an aqueous solvent and mixing to prepare a coating solution,
adding the core particles to the coating solution and mixing to prepare a first mixed solution,
adding a phosphorus-based raw material to the first mixed solution and mixing to prepare a second mixed solution, and

EP 4 567 927 A1

removing an aqueous solvent from the second mixed solution, drying a resultant product, and heat treating the resultant product to obtain the positive electrode active material,
wherein the method is a method of preparing a positive electrode active material.

Clause 17. The method of clause 16, wherein
in the layered lithium nickel-manganese-based composite oxide, a nickel amount is 60 mol% to 80 mol%, a manganese amount is greater than, or equal to, 15 mol%, an aluminium amount is 0 mol% to 3 mol%, and a cobalt amount is 0 mol% to 0.01 mol%, based on 100 mol% of a total metal amount excluding lithium.

Clause 18. The method of clause 16 or clause 17, wherein

the aluminium raw material is aluminium sulfate, and
the phosphorus-based raw material is phosphoric acid.

Clause 19. The method of any one of clauses 16 to 18, wherein

an aluminium amount of the aluminium raw material is 0.5 mol% to 3 mol%, based on 100 mol% of a total metal amount excluding lithium and aluminium of the aluminium raw material in the core particles, and
a phosphorus amount of the phosphorus-based raw material is 0.1 mol% to 2 mol%, based on 100 mol% of a total metal amount of the core particles and phosphorus of the phosphorus-based raw material.

Clause 20. The method of any one of clauses 16 to 19, wherein

a pH of the coating solution is 1.5 to 4,
a time required to add the core particles to the coating solution is 30 seconds per 500 gram (g) to 2 minutes per 500 g,
a mixing time after adding the core particles to the coating solution is 15 minutes to 60 minutes, and
a pH of the first mixed solution is 5.5 to 8.5.

Clause 21. The method of any one of clauses 16 to 20, wherein

a mixing time after adding the phosphorus-based raw material to the first mixed solution is 15 minutes to 60 minutes, and
a pH of the second mixed solution is 5.5 to 8.5.

Clause 22. The method of any one of clauses 16 to 21, wherein
the aqueous solvent is removed from the second mixed solution and the resultant product is dried in a vacuum condition at 40 °C to 240 °C.

Clause 23. The method of any one of clauses 16 to 22, wherein

a coated product is obtained by removing the aqueous solvent from the second mixed solution and drying the resultant product,
the coated product comprises the core particles and a coating layer on a surface of the core particles, and
the coating layer comprises Al and P, and is in a form of a mesh or spider web.

Clause 24. The method of any one of clauses 16 to 23, wherein
the heat treating is performed at 730 °C to 800 °C.

Clause 25. A positive electrode, comprising

a positive electrode current collector, and
a positive electrode active material layer on the positive electrode current collector,
wherein the positive electrode active material layer comprises the positive electrode active material of any one of clauses 1 to 15.

Clause 26. The positive electrode of clause 25, wherein

the positive electrode active material layer has a loading level of 10 mg/cm$^2$ to 40 mg/cm$^2$, and
the positive electrode active material layer has a density of 3.3 g/cc to 3.7 g/cc.

Clause 27. A rechargeable lithium battery, comprising

the positive electrode of clause 25 or clause 26,
a negative electrode, and
an electrolyte.

Clause 28. The rechargeable lithium battery of clause 27, wherein a charging voltage of the rechargeable battery is greater than, or equal to, 4.45 V.

**Claims**

1. A positive electrode active material, comprising:

   a plurality of core particles comprising a layered lithium nickel-manganese-based composite oxide having a nickel amount greater than, or equal to, 60 mol% based on 100 mol% of a total metal amount excluding lithium; and
   a coating layer on a surface of the core particles and comprising aluminium (Al) and phosphorus (P).

2. The positive electrode active material as claimed in claim 1, wherein
   the coating layer comprises aluminium phosphate.

3. The positive electrode active material as claimed in claim 2, wherein
   the coating layer further comprises aluminium oxide, lithium aluminium oxide, and/or a combination thereof.

4. The positive electrode active material as claimed in any one of claims 1 to 3, wherein
   the positive electrode active material comprises a first coating layer on the surface of the core particles and comprising aluminium oxide, lithium aluminium oxide, and/or a combination thereof and a second coating layer on the first coating layer and comprising aluminium phosphate.

5. The positive electrode active material as claimed in any one of claims 1 to 4, wherein

   an Al amount in the coating layer is 0.5 mol% to 3 mol% based on 100 mol% of a total element amount excluding lithium and oxygen in the positive electrode active material, and
   a P amount in the coating layer is 0.1 mol% to 2 mol% based on 100 mol% of a total element amount excluding lithium and oxygen in the positive electrode active material, optionally wherein
   the Al amount in the coating layer is 0.5 mol% to 1.5 mol% based on 100 mol% of the total element amount excluding lithium and oxygen in the positive electrode active material, and
   the P amount in the coating layer is 0.1 mol% to 0.9 mol% based on 100 mol% of the total element amount excluding lithium and oxygen in the positive electrode active material.

6. The positive electrode active material as claimed in any one of claims 1 to 5, wherein

   an Al amount is 5 at% to 35 at% and a P amount is 0.1 at% to 8 at% based on 100 at% of a total element amount excluding lithium on a surface of the positive electrode active material, measured by scanning electron microscope energy dispersive spectroscopy (SEM-EDS), optionally wherein
   on the surface of the positive electrode active material, a ratio (Al/P) of the Al amount to the P amount is greater than, or equal to, 2.

7. The positive electrode active material as claimed in any one of claims 1 to 6, wherein:

   (i) the coating layer is in a form of a shell around the surface of each of the core particles,

   a thickness of the coating layer is 5 nanometer (nm) to 500 nm, and
   a deviation of a thickness of the coating layer within one positive electrode active material particle is less than, or equal to, 20%; and/or

(ii) in the layered lithium nickel-manganese-based composite oxide of the core particles, the nickel amount is 60 mol% to 80 mol% and a manganese amount is greater than, or equal to, 15 mol% based on 100 mol% of the total metal amount excluding lithium.

8. The positive electrode active material as claimed in any one of claims 1 to 7, wherein:

(i) the layered lithium nickel-manganese-based composite oxide of the core particles further comprises aluminium and an aluminium amount in the core particles is greater than 0 mol% and equal to or less than 3 mol% based on 100 mol% of the total metal amount excluding lithium, optionally wherein
a concentration of aluminium in each of the core particles is substantially uniform; and/or
(ii) in the layered lithium nickel-manganese-based composite oxide of the core particles, a cobalt amount is 0 mol% to 0.01 mol% based on 100 mol% of the total metal amount excluding lithium.

9. The positive electrode active material as claimed in any one of claims 1 to 8, wherein:

(i) the layered lithium nickel-manganese-based composite oxide of the core particles is a positive electrode active material represented by Chemical Formula 1:

**Chemical Formula 1**    $Li_{a1}Ni_{x1}Mn_{y1}Al_{z1}M^1_{w1}O_{2-b1}X_{b1}$, and

wherein in Chemical Formula 1,

$$0.9 \leq a1 \leq 1.8,$$

$$0.6 \leq x1 \leq 0.8,$$

$$0.1 \leq y1 \leq 0.4,$$

$$0 \leq z1 \leq 0.03,$$

$$0 \leq w1 \leq 0.3,$$

$$0.9 \leq x1+y1+z1+w1 \leq 1.1,$$

$$0 \leq b1 \leq 0.1,$$

$M^1$ is at least one element selected from among B, Ba, Ca, Ce, Cr, Fe, Mg, Mo, Nb, Si, Sn, Sr, Ti, V, W, Y, and Zr, and
X is at least one element selected from among F, P and S; and/or

(ii) the core particles are in a form of secondary particles, each of the secondary particles being an agglomeration of a plurality of primary particles, and
an average particle diameter ($D_{50}$) of secondary particles of the positive electrode active material is 10 μm to 25 μm.

10. A method for preparing a positive electrode active material, the method comprising

preparing core particles comprising a layered lithium nickel-manganese-based composite oxide having a nickel amount of greater than, or equal to, 60 mol% based on 100 mol% of a total metal amount excluding lithium, adding an aluminium raw material to an aqueous solvent and mixing to prepare a coating solution, adding the core particles to the coating solution and mixing to prepare a first mixed solution, adding a phosphorus-based raw material to the first mixed solution and mixing to prepare a second mixed solution, and

removing an aqueous solvent from the second mixed solution, drying a resultant product, and heat treating the resultant product to obtain the positive electrode active material,

wherein the method is a method of preparing a positive electrode active material.

11. The method as claimed in claim 10, wherein:

(i) in the layered lithium nickel-manganese-based composite oxide, a nickel amount is 60 mol% to 80 mol%, a manganese amount is greater than, or equal to, 15 mol%, an aluminium amount is 0 mol% to 3 mol%, and a cobalt amount is 0 mol% to 0.01 mol%, based on 100 mol% of a total metal amount excluding lithium; and/or
(ii) the aluminium raw material is aluminium sulfate, and
the phosphorus-based raw material is phosphoric acid.

12. The method as claimed in claim 10 or claim 11, wherein:

(i) an aluminium amount of the aluminium raw material is 0.5 mol% to 3 mol%, based on 100 mol% of a total amount of all elements excluding lithium and oxygen in the core particles and aluminium of the aluminium raw material, and
a phosphorus amount of the phosphorus-based raw material is 0.1 mol% to 2 mol%, based on 100 mol% of a total amount of all elements excluding lithium and oxygen in the core particles and phosphorus of the phosphorus-based raw material; and/or
(ii) a pH of the coating solution is 1.5 to 4,

a time required to add the core particles to the coating solution is 30 seconds per 500 gram (g) to 2 minutes per 500 g,
a mixing time after adding the core particles to the coating solution is 15 minutes to 60 minutes, and
a pH of the first mixed solution is 5.5 to 8.5; and/or

(iii) a mixing time after adding the phosphorus-based raw material to the first mixed solution is 15 minutes to 60 minutes, and
a pH of the second mixed solution is 5.5 to 8.5.

13. The method as claimed in any one of claims 9 to 12, wherein:

(i) the aqueous solvent is removed from the second mixed solution and the resultant product is dried in a vacuum condition at 40 °C to 240 °C; and/or
(ii) a coated product is obtained by removing the aqueous solvent from the second mixed solution and drying the resultant product,

the coated product comprises the core particles and a coating layer on a surface of the core particles, and
the coating layer comprises Al and P, and is in a form of a mesh or spider web; and/or

(iii) the heat treating is performed at 730 °C to 800 °C.

14. A positive electrode, comprising

a positive electrode current collector, and
a positive electrode active material layer on the positive electrode current collector,
wherein the positive electrode active material layer comprises the positive electrode active material as claimed in any one of claims 1 to 9, optionally wherein
the positive electrode active material layer has a loading level of 10 mg/cm$^2$ to 40 mg/cm$^2$, and
the positive electrode active material layer has a density of 3.3 g/cc to 3.7 g/cc.

15. A rechargeable lithium battery, comprising

the positive electrode as claimed in claim 14,
a negative electrode, and
an electrolyte, optionally wherein

a charging voltage of the rechargeable battery is greater than, or equal to, 4.45 V.

FIG. 1

# FIG. 2

<u>100</u>

# FIG. 3

# FIG. 4

FIG. 5

S4800 5.0kV 8.2mm x40.0k SE(M)    1.00um

FIG. 6

S4800 5.0kV 8.1mm x20.0k SE(M,LA0)                    2.00um

FIG. 7

# FIG. 8

**EUROPEAN SEARCH REPORT**

Application Number

EP 24 21 7903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK KWANGJIN ET AL: "Metal phosphate-coated Ni-rich layered oxide positive electrode materials for Li-ion batteries: improved electrochemical performance and decreased Li residuals content", ELECTROCHIMICA ACTA, vol. 257, 16 October 2017 (2017-10-16), pages 217-223, XP085279052, ISSN: 0013-4686, DOI: 10.1016/J.ELECTACTA.2017.10.101 * Abstract, Experimental, Results and discussion, Conclusion; figures 1-3; table 1 * | 1-15 | INV. H01M4/36 H01M4/505 H01M4/525 H01M4/58 H01M10/0525 |
| X | WO 2023/216672 A1 (NINGBO RONBAY NEW ENERGY TECH CO LTD [CN]) 16 November 2023 (2023-11-16) | 1-3,10, 14,15 | |
| A | * see EP 4 517 879 A1 * | 4-9, 11-13 | |
| | & EP 4 517 879 A1 (NINGBO RONBAY NEW ENERGY TECH CO LTD [CN]) 5 March 2025 (2025-03-05) * claims 1-20 * | | **TECHNICAL FIELDS SEARCHED (IPC)** H01M |

The present search report has been drawn up for all claims

| Place of search | Date of completion of the search | Examiner |
|---|---|---|
| Munich | 24 April 2025 | Szekely, Noemi Kinga |

EPO FORM 1503 03.82 (P04C01)

## ANNEX TO THE EUROPEAN SEARCH REPORT
## ON EUROPEAN PATENT APPLICATION NO.

EP 24 21 7903

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2025

| Patent document cited in search report | Publication date | Patent family member(s) | Publication date |
|---|---|---|---|
| WO 2023216672 A1 | 16-11-2023 | CN 114843501 A<br>EP 4517879 A1<br>KR 20250002646 A<br>US 2025070139 A1<br>WO 2023216672 A1 | 02-08-2022<br>05-03-2025<br>07-01-2025<br>27-02-2025<br>16-11-2023 |

EPO FORM P0459

For more details about this annex : see Official Journal of the European Patent Office, No. 12/82